# EUROPEAN PATENT APPLICATION

(11) **EP 2 946 954 A1**
(43) Date of publication of application: **25.11.2015**
(21) Application number: 15169007.0
(22) Date of filing: 22.05.2015
(51) Int. Cl.: B60J 1/20, C09J 7/04, D06M 15/263, D06M 15/333, D06M 15/564, D06M 23/16

(54) **TRANSPARENT TEXTILE WITH SELF-ADHESIVE PROPERTIES**

(30) Priority: 22.05.2014 BE 201400398; 23.07.2014 BE 201400570
(71) Applicant: Lampe Textiles, 8700 Tielt (BE)
(72) Inventor: Lampe, Philippe, 8700 Tielt (BE)
(74) Representative: DenK iP

(57) **Abstract**

The present invention relates to a textile (10) which is capable of being stuck to a transparent surface and which makes it possible to look out of a room with a lower light intensity into a room with a higher light intensity but which prevents looking out of a room with a higher light intensity inside into a room with a lower light intensity. The textile (10) comprises threads (11, 12) characterised in that they have a fibrous character, which are shear-resistant with respect to one another, in such a way that a textile aspect is retained, and wherein an adhesive (14) is applied to the threads (11, 12) on one side in order to apply the textile (10) to a transparent surface, wherein the adhesive is applied such that at least at one side the fibrous character of the threads is preserved.

## Description

### Field of the invention

The present invention relates generally to a textile, in particular to a tissue or a knitted fabric which can be stuck to transparent surfaces and which makes it possible to look out of a room with a lower light intensity into a room with a higher light intensity but which prevents looking out of a room with a higher light intensity inside into a room with a lower light intensity. The invention further relates to a method of producing a textile of this type.

The invention is useful in particular in the field of interior design, more particularly in the field of window decoration.

### Background of the invention

Textile fabric is used in the form of curtains in order to screen or to conceal something. Curtains are frequently suspended on the inside of an outside window.

As an alternative to curtains, films are also commercially available which are intended to be fastened to the inside of a window, in order to reduce incoming light and/or in order to keep out inquisitive looks. Films of this type can be produced from paper or plastics material (plastic), and frequently cause a diffuse reflection of light. Films of this type provide the desired effect of keeping out inquisitive looks, but have the drawback that the visibility from the inside to the outside is substantially limited. In addition, it is not always equally easy to apply films of this type without creases and without air bubbles trapped inside. The attractive aesthetic aspect of textile is also not present in films of this type.

US 5 728 632 describes a tissue intended to be fastened to a window, which at the same time prevents looking through the window from the outside into the inside, but which nevertheless allows looking through the window from the inside to the outside. To this end, in a first embodiment a tissue is provided, the weft and the warp of which are pressed flat in order to provide a linear contact surface. The threads of the tissue are completely coated with a resin, and an adhesive is applied to the surface of the tissue coated with resin, in lines along the threads, in order to be able to apply the tissue coated with the resin to a surface. In an alternative embodiment, coated threads are woven beforehand, after which adhesive is applied once again, in lines along the threads. This linear contact surface constitutes the difference with earlier designs, and is necessary in order to obtain complete adhesion between the tissue and the window.

The tissue described in US 5 728 632 has the drawback that it is not characterized by a textile aspect, because either the fibre structure is encapsulated to such a degree that this can no longer be determined, or that use is made in both the warp and the weft of monofilaments which are pressed flat and which in themselves display no textile aspect.

### Summary of the invention

An object of embodiments of the present invention is to provide a textile which can be stuck to transparent surfaces and which makes it possible to look out of a room with a lower light intensity into a room with a higher light intensity but which prevents looking out of a room with a higher light intensity inside into a room with a lower light intensity, but which also has a textile aspect.

The object named above is attained by a textile, for instance a tissue or knitted fabric, according to the present invention.

In a first aspect the invention provides a textile, for example a tissue or knitted fabric, which is capable of being stuck to a transparent surface and which makes it possible to look out of a room with a lower light intensity into a room with a higher light intensity but which prevents looking out of a room with a higher light intensity inside into a room with a lower light intensity. The tissue or the knitted fabric comprises threads with fibrous character and is characterized in that the threads are shear-resistant with respect to one another. This means that the threads have substantially no freedom of movement with respect to one another. The expression "substantially no freedom of movement" is intended to mean that the threads can scarcely shift, or even cannot shift at all, with respect to one another, in particular when forces are applied to the textile such as those which are applied during the application of a textile of this type to a transparent surface such as a glass plate. When the textile is rubbed, the threads cannot move with respect to one another. Shear resistance of the threads in this way can be achieved by impregnating the threads with an impregnation material or by using a weave which allows the threads virtually no freedom of movement or by using threads which consist in part of melt fibres or which consist of bicomponent fibres, in which case part of the material is melted. The textile is characterized in that an adhesive is applied to the threads on one side in order to apply the textile to a transparent surface, wherein the adhesive is applied such that at least on one side the fibrous character of the threads is preserved. The textile is further characterized in that a textile aspect is retained, i.e. its appearance as a textile material is preserved.

An advantage of a textile according to the present invention is that it is particularly suitable for being applied to glass, for example of windows or doors. In this way, it is suitable for ensuring during the day, in daylight, that people can look from the inside to the outside through the expanses of glass thereof without people from outside being able to look inside. In this respect a textile has an advantage over a film that it has a textile aspect, which appears better to many people and is felt to be more pleasant and warmer. In addition, the openings in the textile, in between the threads, allow the possibility of looking through from one side.

In order to ensure that the textile retains its function, the threads of the textile have to remain substantially in the same place. This can be carried out in embodiments of the present invention by the impregnation of the threads. As a result of the impregnation of the threads, the impregnation material is introduced deep into the thread, between the fibres thereof. After the textile has dried out, the impregnation material is condensed out and the fibres stick well to one another. In addition, in the case of tissues the points of intersection between the warp threads and the weft threads can stick to one another, as a result of which the warp and the weft can no longer move with respect to each other. As a result, the tissue becomes stronger and is not frayed when cut. The elasticity of the tissue is also reduced considerably on account of this impregnation, so that the application thereof to the transparent surface becomes much easier, since there is less chance of deformation.

The retention of the position of the warp threads and the weft threads with respect to one another in a tissue can also make use of specific weaves which ensure that the threads have hardly any freedom of movement with respect to one another. An example of a weave of this type is gauze weave. In order to retain the position still better, the threads of such tissues with specific weaves which ensure that the threads have scarcely any freedom of movement with respect to one another can also be impregnated, as described above.

The retention of the position of the threads in a knitted fabric can also make use of specific weaves which ensure that the threads have no freedom of movement with respect to one another. An example of a weave of this type is knitting according to warp knitting such as run-resistant fabric. In order to retain the position still better, the threads of knitted fabrics of this type can also be impregnated, as described above.

The retention of the position of the threads can also make use of threads which comprise fibres, in which case part of the fibres or part of the material of the fibres can melt. The threads then consist in part of bicomponent fibres or of melt fibres. After the weaving or the knitting the meltable part can be melted in a furnace. On account of the flow of the material the fibres should adhere mutually to one another well and should also stick the points of intersection between the threads to one another well. As a result, the threads can no longer move with respect to one another.

A major advantage of a textile according to the present invention is that the textile aspect is retained, in other words the textile remains even after the impregnation with the impregnation material or retain their appearance as textile material after the partial melting of the threads. This is in contrast to a tissue in which the threads are completely enclosed in a resin, as a result of which part of or usually the whole of the surface profile and thus the textile aspect automatically disappears. According to the present invention the textile is changed as little as possible in terms of its appearance and in terms of touch.

In a textile according to embodiments of the present invention the impregnation material can be an acrylate. An acrylate is found to be particularly advantageous for use as a base material for the impregnation of the threads since it is UV-resistant, highly resistant to ageing and little influenced by temperature. Acrylate is easy to process. Acrylate has a low comparable weight.

In addition, the adhesive can also be an acrylate. An acrylate is found to be particularly advantageous for use as an adhesive for applying the textile to a transparent surface since it is UV-resistant, highly resistant to ageing and little influenced by temperature, as a result of which the adhesive capable of being glued can be applied to the transparent surface both at high and at low temperatures.

The impregnation material and the adhesive can be from the same family for example. If the impregnation material and the adhesive are from the same family, for example - but not limited thereto - two acrylates, then an increased adhesion between the impregnation material and the adhesive is observed. This prevents the textile from becoming loose from the adhesive, where the adhesive is to remain sticking to the transparent surface. In this way, a better adhesion of the textile to the transparent surface is achieved.

In a textile according to embodiments of the present invention the bicomponent fibre or the melt fibre can consist of polyolefin. A polyolefin is particularly suitable for melting within a limited temperature range and for producing sufficient flow between the fibres. Polyolefins are, in addition, highly resistant to ageing, and they are easy to process.

In embodiments of the present invention the adhesive can be applied to the points of intersection of the threads, which manifest themselves as raised portions. An advantage of a textile according to the present invention is that it is possible for the adhesive to be applied only to the points of intersection between the threads. In this way, sufficient force can nevertheless be obtained with a minimum quantity of adhesive to stick the textile to a transparent surface in a lasting manner. The invention, however, is not limited to this: the adhesive can also be applied to the threads between the points of intersection. In embodiments of the present invention it is thus possible to apply glue not only to points of intersection between the threads, but also to the pieces of thread between them. The application of more adhesive increases the adhesive force of the textile.

In a tissue according to embodiments of the present invention the warp threads and the weft threads can form a gauze weave for example. An advantage of a gauze weave is that the threads inside the tissue are shear-resistant and can thus move only with difficulty with respect to one another, as a result of which impregnation is not necessary in the case of this weave.

In a knitted fabric according to embodiments of the present invention use can be made for example of a run-resistant fabric. An advantage of a run-resistant fabric is that the threads inside the knitted fabric are shear-resistant and can thus move only with difficulty with respect to one another, as a result of which impregnation is not necessary in the case of this knitted fabric.

In a tissue according to embodiments of the present invention the warp threads and the weft threads can form a plain weave. An advantage of a plain weave is that this imparts a certain degree of rigidity to the tissue, as a result of which the tissue is easier to handle during the application to the transparent surface. Other types of weave between the warp threads and weft threads are of course possible.

A textile according to embodiments of the present invention comprises sufficient threads to make it possible to look out of a room with a lower light intensity into a room with a higher light intensity and also to prevent looking out of a room with a higher light intensity inside into a room with a lower light intensity. In the case of a tissue the number of warps and wefts is necessary to reach this characteristic in a manner dependent upon the sort of thread and the diameter of the thread used. On the one hand the openings in the textile, for example the meshes of the tissue, have to be sufficiently large in order to make it possible to look in one direction (dark to light), and on the other hand they have to be sufficiently small to prevent looking in the other direction (light to dark).

According to the present invention, the treads used for the textile comprise a plurality of fibres, such that the threads obtain a fibrous character. Mono-filament threads, to the contrary, do not have a fibrous character, due to which tissue with mono-filament threads exhibit less a textile aspect.

In a second aspect the present invention provides a method of producing a textile which is adhesive on a transparent surface and which makes it possible to look out of a room with a lower light intensity into a room with a higher light intensity but which prevents looking out of a room with a higher light intensity inside into a room with a lower light intensity. The method comprises the following steps:
- the provision of a textile with threads with a fibrous character, which is either a tissue with intersecting warp threads and weft threads and or is a knitted fabric,
- making the threads of the textile shear-resistant in such a way that a textile aspect is retained, for example by a specific weave (suitably linked) of the threads, and/or by impregnating the threads of the textile with impregnation material or partially melting the threads,
- the application of adhesive on one side to at least part of the threads, such that at least at one side thereof the fibrous character of the threads is preserved.

A method according to the present invention is easy to carry out and delivers pieces of textile which have sufficient adhesive force to remain fastened to a transparent surface over a prolonged period, i.e. for several weeks to several months or years.

The impregnation of the threads with an impregnation material can be carried out by means of foularding. The threads can be impregnated before or after they are processed to form a textile.

The impregnation of threads with an impregnation material and the application of adhesive to at least part of the threads can include the application of materials of the same family. This increases the bond between the adhesive and the impregnation material, and therefore the adherence to each other.

Specific and preferred aspects of the invention are set out in the attached independent and dependent claims. Features of the dependent claims can be combined with features of the independent claims and with features of further dependent claims as indicated and not merely as expressly set out in the claims.

Before the summary of the invention and the advantages achieved with respect to the prior art, certain aims and advantages of the invention have been described above. It should of course be understood that all these aims or advantages cannot necessarily be achieved by every specific embodiment of the invention. In this way for example, persons skilled in the art will recognize that the invention can be embodied or carried out in a manner which achieves or optimizes one advantage or a number of advantages as presented here, without necessarily in this case achieving other aims or advantages which can be presented or suggested here.

The above aspects and other aspects of the invention will be clear and will be revealed with reference to the embodiment(s) described hereinafter.

### Brief description of the drawings

The invention will now be described in greater detail, by way of example, with reference to the accompanying figures:

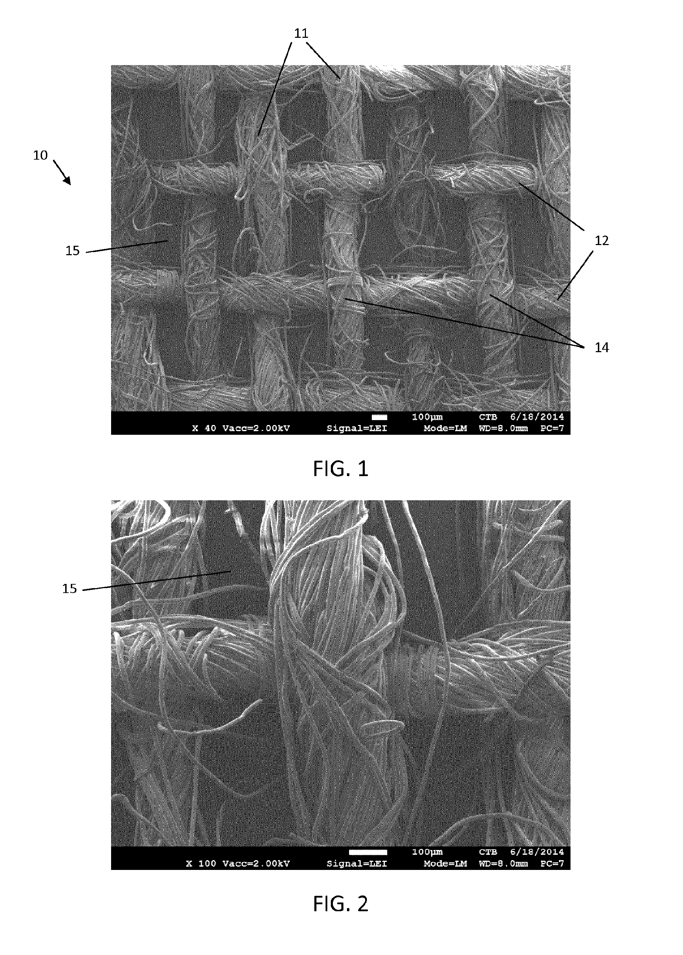

Fig. 1 shows a Scanning Electron Microscopy (SEM) photograph for a tissue not impregnated.
Fig. 2 is an enlargement of three points of intersection of the tissue not impregnated from Fig. 1.
Fig. 3 shows a Scanning Electron Microscopy (SEM) photograph for the adhesive side of a tissue according to embodiments of the present invention. In addition, the impregnated warp threads and weft threads of a tissue may be seen. Furthermore, dots of adhesive are visible on the various points of intersection of the warp threads and weft threads.
Fig. 4 is an enlargement of three points of intersection of the adhesive side of the tissue from the centre of Fig. 3.
Fig. 5 is an SEM cross-sectional view of a tissue according to the embodiment of the present invention, in which the adhesive side is present on the top side and the non-adhesive side is present on the underside of the picture. The impregnated filaments from which the thread is formed are visible in the cross-section. The adhesive is visible on the top side. It is clear that at the bottom side the fibrous character of the thread is preserved.
Fig. 6 is an SEM photograph of a top view of the non-adhesive side of a tissue according to embodiments of the present invention. No adhesive is visible on this. At the non-adhesive side, the fibrous character of the thread is clearly preserved.
Fig. 7 illustrates the stages in a method according to embodiments of the present invention.

The figures are solely diagrammatic and not limiting. In the figures the dimensions of some components may be shown exaggerated and not to scale for purposes of illustration. Dimensions and relative dimensions do not necessarily agree with effective embodiments of the invention.

Reference numbers in the claims may not be interpreted so as to restrict the protective scope.

In the various figures the same reference numbers refer to the same or similar elements.

### Detailed description of illustrative embodiments

The present invention will be described with reference to particular embodiments and with reference to certain drawings, but the invention, however, is not restricted to them but is restricted only by the claims.

The terms "first", "second" and the like in the description and in the claims are used to differentiate similar elements and not necessarily for describing a sequence, either chronologically or spatially or in ranking or in any other manner. It has to be understood that the terms and the manner applied are interchangeable under suitable circumstances and that the embodiments of the invention are suitably described therein in order to work in a sequence other than described or reproduced here.

In addition, the terms "uppermost", "lowermost", "above", "under" and the like in the description and the claims are used for the purposes of description and not necessarily to describe relative positions. It should be understood that the terms which are used in this way can be mutually interchanged under certain circumstances and that the embodiments of the invention described here are also suitable for operating in accordance with orientations other than described or reproduced here.

It should be pointed out that the term "comprises", as used in the claims, should not be interpreted as limited to the means described hereinafter; this term does not rule out other elements or steps. It should therefore be interpreted as specifying the existence of the mentioned features, values, steps or components to which reference is made, but does not rule out the existence or addition of one or more other features, values, steps or components, or groups of them. In this way, the scope of the expression "a device comprising means A and B" should not be limited to devices which comprise only components A and B. It means that with respect to the present invention, A and B are the only relevant components of the device.

References throughout this specification to "one embodiment" or to "an embodiment" mean that a specific feature, structure or characteristic described in conjunction with the embodiment is included in at least one embodiment of the present invention. In this way, occurrences of the expressions "in one embodiment" or "in an embodiment" in various locations throughout this specification do not necessarily have to refer in every case to the same embodiment, but they can indeed do so. In addition, the specific features, structures or characteristics can be combined in any suitable manner, as should be clear to the average person skilled in the art on the basis of this announcement, in one or more embodiments.

In a comparable manner it should be appreciated that, in the description of embodiments of the invention by way of example, various features of the invention are sometimes grouped together in one single embodiment, figure or description thereof with the aim of streamlining the disclosure and assisting the comprehension of one or more of the various inventive aspects. This method of disclosure should in any case not be interpreted as a reflection of an intention that the invention claims more features than are explicitly specified in each claim. Previously, as the following claims reflect, inventive aspects are present in less than all the features of one single previous disclosed embodiment. In this way, the claims following the detailed description are herewith explicitly incorporated into this detailed description, with each stand-alone claim as a separate embodiment of this invention.

In addition, whilst some embodiments described therein comprise some, but not other, features included in other embodiments, combinations of features of various embodiments are intended as being within the scope of the invention and form these various embodiments, as should be understood by the person skilled in the art. By way of example, in the following claims any of the embodiments described can be used in any combination.

In the description provided here numerous specific details are put forward. In any event it has to be understood that embodiments of the invention can be carried out without these specific details. In other cases well-known methods, structures and techniques have not been shown in detail in order to keep this description clear.

### DEFINITIONS

In the context of the present invention, tissue is intended to be a piece of textile of threads which are woven through one another. During the weaving a number of threads have been stretched parallel to the loom; these are the warp threads. After that, other threads are laid one by one perpendicular to this, between the warp threads; these are the weft threads. A point of intersection between the two threads, which to a greater or lesser extent provides for a raised portion in the tissue (depending upon the diameter of the threads), occurs where the warp threads and weft threads intersect one another.

In the context of the present invention, knitted fabric is intended to be a piece of textile of threads which are knitted through one another. This can for example be carried out according to one of the knitting techniques described in ISO 8388 and ISO 3572.

Meshes are intended to be openings which occur as voids between the threads of the tissue and the knitted fabrics. The various sides of the meshes can be different in dimension and shape, depending upon the weave used and the number of threads which are used. In particular, in the case of tissues in which warp threads and weft threads are used, the meshes can be rectangular.

The size is the surface of the opening in the textile which is referred to as a mesh. For a fixed thread diameter the size is set by providing another number of threads per centimetre for the textile. In the case of a tissue, for a fixed number of warp threads and weft threads, the size varies per centimetre in inverse proportion to the diameter of the warp threads and weft threads.

The mesh surface of a textile is defined as the sum of all the surfaces of the meshes in the textile.

A thread with fibrous character may be composed of short thin fibres of synthetic of natural source, of the same or different materials, which are twisted together to form a thread (= spinning). A thread with fibrous character can alternatively also be a multifilament thread, consisting of two or more continuous fibres of synthetic or natural source, of same of different materials, that run aside one another or that are twisted together or that are entangled via a so-called texturing process.

Each fibre forms in the thread a discernable entity. With "fibrous character" in the context of the present invention is meant that the fibres are visually discernable.

A transparent textile is a textile through which it is possible to look. The question as to whether or not it is transparent is determined by the ratio of "total mesh surface / total surface of the textile". In the context of the present invention, transparent textiles are considered which make it possible to look out of a room with a lower light intensity, for example indoors, into a room with a higher light intensity, for example outside, and which at the same time prevent looking from a room with a higher light intensity, for example outside, into a room with a lower light intensity, for example indoors. To this end, the ratio of "total mesh surface / total surface of the textile" should lie between 18% and 60%, preferably between 35% and 45%.

Impregnation in the context of the present invention signifies the penetration of a material, in the context of the present invention a thread, by another substance, in the context of the present invention referred to as an impregnation material. The impregnation material can be for example, but in a manner not limiting the invention thereto, a resin, such as for example an acrylate, or a starch derivative, such as for example potato starch. Low-viscosity liquids with hardening properties are possible.

In the context of the present invention this can typically be carried out by immersing the textile in a dispersion, an emulsion or a solution of the impregnation material.

Bicomponent fibres in the context of the present invention are synthetic fibres with a core / mantle structure in which the core and the mantle consist of different polymers. The mantle is the polymer which is present on the outer edge of the fibre. This polymer has a lower melting temperature than the polymer which is present in the core. A bicomponent fibre can be for example, but in a manner not limiting the invention thereto, a polyolefin fibre, such as for example polypropylene in the core and another polypropylene, with a different molecular weight and a different melting temperature, for example a lower melting temperature, in the mantle.

Melt fibres in the context of the present invention are synthetic fibres which consist completely of one thermoplastic polymer. The processed threads then consist to a great extent of these fibres. The thermoplastic polymer can be for example, but in a manner not limiting the invention thereto, a polyethylene.

With threads which have substantially no freedom of movement with respect to one another it is intended that crossing threads or threads touching one another in another manner should be shear-resistant with respect to one another, and in an optimum manner should not shift with respect to one another. Being shear-resistant is determined in accordance with forces upon the textile as they are adjusted in the application of a textile of this type to a transparent surface, such as a glass plate, in order to stick the textile to it. If the textile is rubbed the threads cannot shift with respect to one another.

Foularding in the context of the present invention is intended to be a continuous process in which working is carried out with a foulard. In this case material is conveyed into a trough, where it is saturated with the impregnation material. In a roller mill following downstream of this, the impregnation material is introduced deep into the thread between the fibres under the effect of pressure, and the surplus impregnation material is pressed back, so that a set quantity of impregnation material remains behind in the threads. After that, the impregnation material is fixed in the textile, for example by hardening in a temperature step. To this end, the textile can be introduced into a furnace for a predetermined period of time.

In the context of the present invention "the textile aspect of a textile material" is intended to mean that a fibre-like structure is perceptible in the threads used. If the threads are completely enclosed, so that the various fibres of the thread can no longer be differentiated, then it may be said that this textile has no textile aspect. In the same way, it may be said that if the threads in the textile consist of monofilaments, this is a tissue or a knitted fabric without a textile aspect.

### DESCRIPTION

In a first aspect the invention provides for a textile 10 which is capable of being stuck to a flat transparent surface, such as for example glass. The purpose of the textile, sometimes applied to the transparent surface, is to make it possible to look out of a room with a lower light intensity, for example indoors, into a room with a higher light intensity, for example outside, and at the same time to prevent looking from a room with a higher light intensity, for example outside, into a room with a lower light intensity, for example indoors. The textile can be applied for example to a pane of glass in order to implement the envisaged aim.

The threads of the textile are threads with a fibrous character. The textile 10 can be for example a woven textile and it can comprise intersecting warp threads 11 and weft threads 12. According to the present invention the textile is characterized in that the threads have substantially no freedom of movement with respect to one another. In order to make the threads more shear-resistant in the tissue the threads can be impregnated. The warp threads and weft threads 11 and 12 are impregnated, i.e. soaked in depth, with an impregnation material 13, whereby the fibrous character of the thread is preserved. In addition, an adhesive 14 is applied to the tissue on one side, in order to stick the tissue on the side to the transparent surface. The adhesive 14 is applied such that at least at one side the fibrous character of the threads 11, 12 is preserved.

On account of its composition with impregnated threads and adhesive 14 applied thereto, the tissue can be glued in a permanent manner to a smooth surface. The tissue attached in this way ensures that a one-way see-through effect is produced.

In order to achieve this one-way see-through effect the textile has to be formed in such a way that the diameter of the threads and the size of the openings (meshes) between the threads are of a size that in daylight outside and with no light inside it is easy to see through to the outside but difficult to see inside. Different diameters of thread allow different mesh sizes in this case.

In an advantageous embodiment the ratio of the mesh surface to the overall surface is approximately 40%.

In order to fasten the textile to the transparent surface in an easy manner it is better to provide a textile which already has a certain degree of rigidity. To this end, in an embodiment a tissue can consist of a plain weave. Various other weaves, such as for example gauze weaves and twill weaves, are also possible, but it is preferable for a weave to be used which already imparts a certain degree of rigidity to the tissue, such as a plain weave. A knitted fabric can be knitted for example in accordance with a run-resistant fabric.

The threads 11, 12 used for a textile according to embodiments of the present invention are threads with fibrous character. A thread of this type consists of various fibres of the same or different materials, which extend alongside one another or are turned into one another. The fibres can be of natural or synthetic origin. Examples of fibres of natural origin are: cotton, flax, viscose, hemp, wool, jute, sisal, coconut fibre etc. Examples of fibres of synthetic origin are polyester, polyolefins, polyamides, acrylic etc. The threads can also be produced from mixtures of the fibres named above.

According to the present invention the textile is shear-resistant. This means that the threads which form the textile have substantially no freedom of movement with respect to one another, so that they can scarcely move, for example shift, or even cannot move at all, with respect to one another.

According to embodiments of the invention the threads can be impregnated for this purpose. This can either be carried out before the weaving or knitting or after the threads have been processed to form a textile. Impregnation can [be carried out] for example by immersion of the thread or the textile into an impregnating material 13, in which case the thread absorbs the impregnating material. This absorption can take place by the material of the fibres itself absorbing impregnating material (for example cotton, viscose, flax, etc.), or, in the case of synthetic fibres the impregnating material 13 is set on, around and between the different fibres by virtue of capillary action. A pressure may be suitable in order to achieve a better impregnation. After the immersion of the textile in an impregnation bath it can be pressed out, for example by being passed between rollers, in order to remove excess impregnating material. This combination of immersion and pressing out is also referred to as foularding. During this pressing step not only is excess impregnating material removed, but part of the impregnating material is also pushed into the threads.

Other suitable techniques for impregnation can likewise be adapted according to the present invention, for example the vaporization of impregnating material, spreading the impregnating material as a layer onto the textile, or applying the impregnating material onto the textile by way of a foam application. In each of these methods it is crucial that suitable measures should be taken so that the meshes 15 in the textile should remain open at least in part, in order to make one-way see-through possible. This can be achieved by selective application of the impregnating material 13 substantially only to and into the threads, or, in the case of techniques in which impregnating material 13 will nevertheless finish up in the meshes 15, the renewed opening up of these openings, for example by the directed blowing of air flows.

Suitable impregnating materials 13 according to embodiments of the present invention are inter alia polyacrylates, polyurethanes, polyvinyl alcohols, polyvinyl acetates, and starch derivatives.

In particular, an aqueous acrylate dispersion for example can be used. This has the advantage that this displays a high degree of UV resistance, and has a low susceptibility to ageing. After being polymerized out 100%, acrylates are completely insoluble in water, so that the textile treated has a low susceptibility to moisture.

After the impregnation and possible pressing out of the textile, the textile 10 is dried, as a result of which the water evaporates and the acrylate is condensed out to form a strengthening material.

In particular, without the invention being limited thereto, the acrylate dispersion can be a mixture of a hard acrylate, a soft acrylate and water.

Hard acrylate is a polymerized-out acrylate with hard properties, produced by the complete condensation out of a polymer acrylate dispersion. A polymer acrylate dispersion of this type, adapted or textile substrate, imparts a hard characteristic to the textile after being condensed out. An example of a hard acrylate is TUBICOAT A 41, available from CHT - BEZEMA.

Soft acrylate is a polymerized-out acrylate with soft, adhesive properties, produced by the complete condensation out of a polymer acrylate dispersion. A polymer acrylate dispersion of this type, adapted to a textile substrate, will make the threads and fibres adhere mutually after the condensation out. An example of a soft acrylate is TUBICOAT A 22, available from CHT- BEZEMA.

The impregnation ensures on the one hand that the threads 11, 12 themselves acquire a certain degree of rigidity, since the fibres are mutually stuck to one another. In addition, this ensures that the entire textile acquires extra strength, since the points of intersection between the threads are also stuck to one another. This ensures that the textile 10 becomes shear-resistant, in other words that the threads 11, 12 cannot shift with respect to one another, for example during the application of the textile 10 to the transparent surface. As a result, the textile 10 is also not frayed, for example in the cutting. In addition, the elasticity of the textile 10 is considerably reduced by impregnation, which again facilitates the application to the transparent surface so that the textile 10 has less chance of deforming. Since the textile 10 has become harder it is also easier to cut. Above all, however, a crucial advantage of impregnating the textile 10 according to the invention is that the textile aspect of the tissue or the knitted fabric is retained; or, with other words, that the fibrous character of the threads is still visually perceptible after impregnation. In addition, the impregnation ensures a better adhesion of the adhesive to be applied subsequently, and it ensures that as little adhesive as possible has to be applied while an adequate adhesive force is still achieved.

Another way of making the textile shear-resistant is by working with threads 11, 12 which consist in part of melt fibres or which consist of bicomponent fibres. These textiles can also be made shear-resistant by melting the meltable part by passing the textile for example through a hot-air furnace or through an infrared field. As a result, the low-melting material will melt and the points of intersection of the threads will stick to one another. As a result, the application of the textile to a transparent surface will be facilitated and the threads will also remain in the same place even with repeated recycling (removal and refitting) of the textile.

Yet another way of making the textile shear-resistant is to use, during the production of the textile, specific weaves which have this property, such as for example gauze weave in the tissues or knitted fabric in accordance with a run-resistant fabric.

An adhesive 14 is applied to the shear-resistant textile such that at least at one side the fibrous character of the textile is preserved. This can be carried out in any suitable manner, for example by spreading a paste over the textile, by the application of a foam, by spraying adhesive over the textile or by the selective application of adhesive to the textile (dot-coating), for example by means of a lick roll. In principle, it is sufficient, in accordance with embodiments of the present invention, for only adhesive to be applied to the points of intersection between the threads 11, 12. It is important that during the application of the adhesive 14 the meshes 15 in the textile 10 also remain open or are opened again immediately after the application of the adhesive 14, for example by the provision of specially directed air flows.

Use can be made of any suitable adhesive 14 to fasten a textile 10 to a transparent surface. An acrylate is particularly suitable, for example in the form of a viscous acrylate paste. This has the advantage that it is UV-resistant and resistant to ageing, and has a low susceptibility to temperature (it could be used both at low and at high temperatures).

An adhesive 14 in the form of an acrylate is preferably a soft acrylate, with soft, adhesive properties, but where these adhesive properties are permanently self-adhesive. An example of an acrylate adhesive is TUBICOAT STC 100, available from CHT- BEZEMA.

If the threads are impregnated with the textile, before or after the weaving or knitting, it is particularly advantageous to use an adhesive 14 of the same family as the impregnation material 13, for example the two acrylates or the two polyurethanes, on account of their good adhesion to each other.

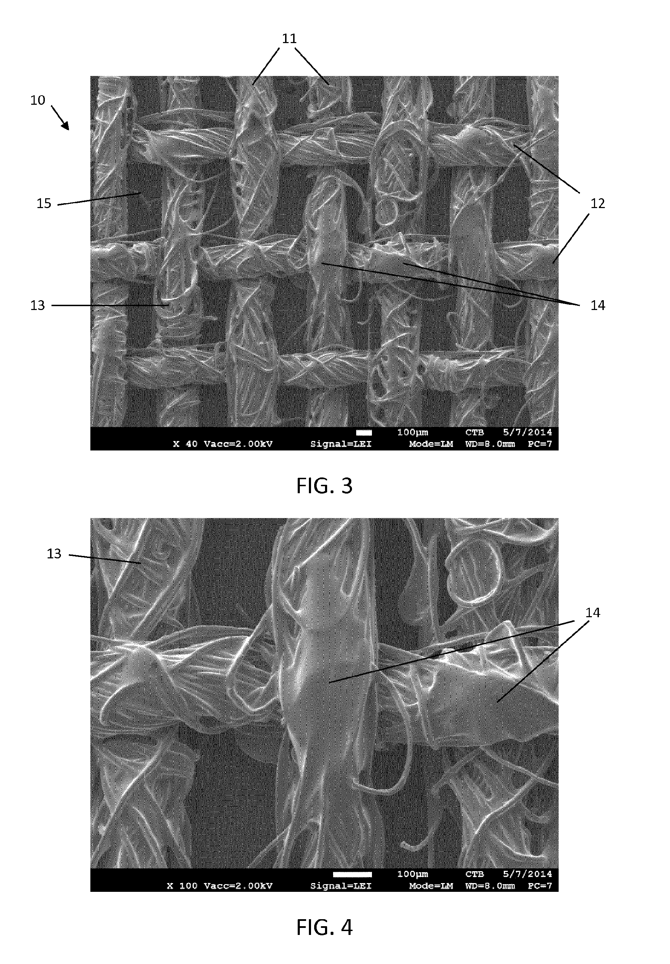

After being impregnated with impregnation material 13 and after the application of an adhesive 14 in accordance with embodiments of the present invention, on the adhesive side, i.e. the side to which the adhesive 14 is applied, the resulting shear-resistant textile 10, for the embodiment in which the threads are impregnated, has a surface as reproduced in Fig. 3, and in the enlargement in Fig. 4. These show SEM photographs of an impregnated tissue 10, in which case adhesive dots 14 are applied to the points of intersection between the warp threads and the weft threads 11, 12, according to an embodiment of the invention. It is clear that neither the impregnation material 13 nor the adhesive 14 fills the meshes 15 of the tissue 10. Outside the points of intersection between the warp threads and the weft threads it may be clearly seen that the threads are permeated with impregnation material 13 and that the various filaments of the thread are surrounded by a thin film, originating from the full bath treatment. As a result, the filaments of the threads stick to one another and the various threads also stick to one another. The fibrous character of the threads, however, is still visible. The threads are not completely covered in such a way that the fibrous character (and hence also the textile aspect) would disappear.

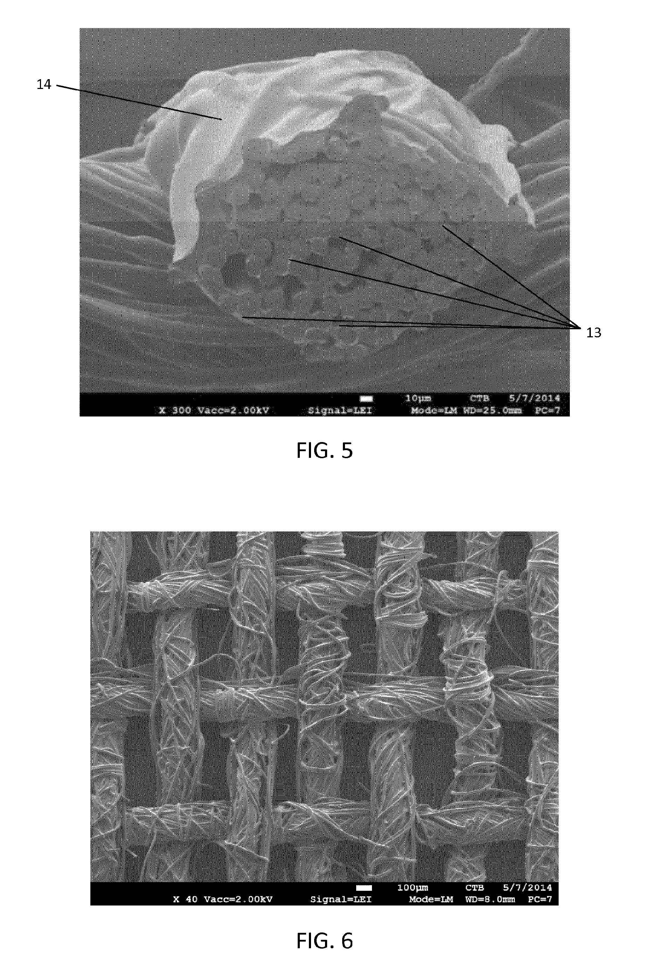

Fig. 5 is a cross-section through a thread, transverse to the longitudinal direction thereof. The different fibres from which the thread is formed are evident from this figure. The impregnation material, acrylate dispersion in the example illustrated, permeates the thread and is present between as many fibres of the thread as possible and sticks the latter to one another and bonds them as such to one another. In this figure the absorption / penetration of the acrylate dispersion which is applied as a full bath treatment is evident in various places. In addition, the adhesive which is applied on top of the impregnated tissue is visible in the cross-section shown in Fig. 5. This adhesive is present only on the top side of the thread and does not penetrate deep into the thread, such that at least at one side the fibrous character is preserved.

It can be seen from Fig. 6, which shows the rear side of the same tissue, that the adhesive which is applied to one side of the tissue does not penetrate to the other side. The impregnation material, the acrylate dispersion in the example presented, has penetrated thoroughly, however, between the fibres. This does not harm the fibre structure of the thread which is retained to the maximum degree, however, as a result of which the textile aspect of the tissue is not lost.

A textile according to embodiments of the present invention can function in an internal location for several months and make it possible to look out of a room with a lower light intensity into a room with a higher light intensity but which prevents looking out of a room with a higher light intensity inside into a room with a lower light intensity, if it does not come into contact with environmental factors such as additional forces which are exerted upon the textile applied to the transparent surface.

The textile can be removed without difficulty from the transparent surface, for example by washing a window, or in the event that something has unfortunately gone wrong in the application the application is carried out again. Various cycles, up to tens of cycles, of sticking fast and loosening can be carried out without difficulty, up to more than 40 cycles, with an acrylate adhesive. Residues of glue which remain behind on the transparent surface during the removal of the textile therefrom are minimal and can easily be removed from the transparent surface.

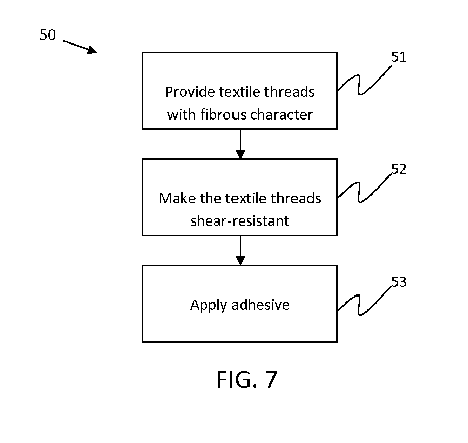

In a second aspect, illustrated in Fig. 7, the invention provides a method 50 for producing a textile which is capable of being stuck to a transparent surface, and which makes it possible to look out of a room with a lower light intensity into a room with a higher light intensity but which prevents looking out of a room with a higher light intensity inside into a room with a lower light intensity. A method according to embodiments of the present invention is illustrated diagrammatically in Fig. 7. The method 50 comprises the following steps:
- the provision 51 of a textile, either a tissue with intersecting warp threads and weft threads or a knitted fabric, wherein the textile is made from threads with fibrous character,
- making shear-resistant 52 the textile such that a textile aspect is preserved, for instance by the impregnation of the threads of the textile with an impregnation material or by the melting of the melt fibres or the bicomponent threads,
- the application 53 of adhesive on one side to at least part of the threads; for example on the points of intersection between the threads, whereby at least at one side the fibrous character of the threads is preserved.

The various stages of this method have already been set out above in the review of the textile.

### EXAMPLE

The invention will now be explained further with reference to the following example, without being limited thereto in any way.

This example relates to a tissue produced from polyester threads. The tissue consists of a plain weave in which 14 weft threads and 21 warp threads are provided per centimetre. As a result, meshes are produced with an average length of 450 micrometres and an average width of 300 micrometres. The tissue has a weight of 75 g/m². The polyester threads in this specific example have a diameter of 200 micrometres and consist of 96 filaments, each of these filaments having a diameter of 10 micrometres.

The tissue was impregnated in a full-bath treatment. The full bath of the full-bath treatment was an acrylate dispersion which in this specific example comprised 20 parts of hard acrylate of the type TUBICOAT A 41, 20 parts of soft acrylate of the type TUBICOAT A 22 and 60 parts of water.

In this specific example the full-bath treatment was applied by passing the tissue first through a full bath (foulard tank) and having the tissue pressed out by a foulard press. For this purpose a pressure of 50 N/mm was exerted, as a result of which the acrylate dispersion was pressed to the maximum degree into the thread between the filaments. After this full-bath treatment the tissue passed through a furnace at 150°C for a duration of 90 seconds. This full heating step ensured that the complete cross-linking of the monomers took place, as a result of which the tissue acquired a stronger structure than before. On account of carrying out an impregnation step as described above, a yield of 15 g/m² was applied, which means that 15 g/m² of impregnation product was applied by the impregnation.

After the full-bath treatment before the impregnation, adhesive was applied to the impregnated tissue by way of a lick roll. As a result, only the top points of the tissue (points of intersection between the warp threads and the weft threads) came into contact with the adhesive which was applied by way of the lick roll. The adhesive which was used was a polyacrylate, a paste of the type TUBICOAT STC 100, which was applied to the tissue on one side in a quantity of 15 g/m².

As a result of the application of the adhesive by way of a lick roll the meshes of the tissue remained open, the textile character of the tissue was retained, and the tissue remained transparent in such a way that with greater light intensity along a first side of the tissue and lower light intensity along a second side of the tissue it is easy to see from the second side to the first side, but it is difficult to see from the first side to the second side.

By means of this method with the lick roll, the tissue described above was provided along one side with the acrylate adhesive in a selective manner on protruding parts of the tissue. After this application, the tissue passed into a furnace at a temperature of 130°C for a duration of 90 seconds, as a result of which the adhesive was fixed.

The resulting tissue was a tissue according to the features of the present invention. This tissue can stick with the adhesive side thereof, i.e. the side on which the adhesive has been applied, to different surfaces, such as for example windows. This prevents people from looking out of a room with a higher light intensity inside into a room with a lower light intensity but which still allows people to look out of a room with a lower light intensity into a room with a higher light intensity.

The present description gives details of defined embodiments of the invention. It should nevertheless be pointed out that however detailed the foregoing appears in the text the invention can be adapted in numerous ways. It should be pointed out that the use of defined terminology when describing defined features or aspects of the invention must not be taken to imply that the terminology herein is newly defined so as to be limited to specific features of the features or aspects of the invention to which this terminology is linked.

## Claims

1. A textile (10) which is capable of being stuck to a transparent surface and which makes it possible to look out of a room with a lower light intensity into a room with a higher light intensity but which prevents looking out of a room with a higher light intensity inside into a room with a lower light intensity, the textile (10) comprising threads (11, 12), **characterized in that** the threads are threads with a fibrous character that are shear-resistant with respect to one another, in such a way that a textile aspect is retained, and that an adhesive (14) is applied to the threads (11, 12) on one side in order to apply the textile (10) to a transparent surface, wherein the adhesive (14) is applied such that at least at one side the fibrous character is preserved.

2. The textile (10) according to Claim 1, wherein the threads are shear-resistant with respect to one another as a result of impregnating the threads with impregnation material.

3. The textile (10) according to Claim 1, wherein the impregnation material (13) is an acrylate.

4. The textile (10) according to any one of the preceding Claims, wherein the adhesive (14) is an acrylate.

5. The textile (10) according to Claim 2, wherein the impregnation material (13) and the adhesive (14) are from the same family.

6. The textile (10) according to any one of the preceding Claims, wherein the adhesive (14) is applied at least to raised portions of the threads (11, 12).

7. The textile (10) according to Claim 6, wherein the adhesive (14) is applied to the threads (11, 12) between the raised portions.

8. The textile (10) according to any one of the preceding Claims, wherein the threads (11, 12) have a plain weave.

9. The textile (10) according to any one of the preceding Claims, wherein the threads comprise fibres, wherein a part of the fibres or a part of the material of the fibres can melt.

10. A method (50) of producing a textile (10) which is adhesive on a transparent surface and which makes it possible to look out of a room with a lower light intensity into a room with a higher light intensity but which prevents looking out of a room with a higher light intensity inside into a room with a lower light intensity, **characterized in that** the method comprises the following steps:
- the provision (51) of a textile with threads (11, 12) with a fibrous character,
- making the textile shear-resistant in such a way that a textile aspect is retained,
- the application (53) of adhesive (14) on one side to at least part of the threads (11, 12), wherein at least at one side a fibrous character of the threads is preserved.

11. The method (50) according to Claim 10, wherein making the textile shear-resistant (52) in such a way that a textile aspect is retained includes a specific weave of the threads (11, 12).

12. The method (50) according to Claim 10 or 11, wherein making the textile shear-resistant (52) in such a way that a textile aspect is retained includes the partial melting of the threads (11, 12).

13. The method (50) according to any one of Claims 10 to 12, wherein making the textile shear-resistant (52) in such a way that a textile aspect is retained includes impregnating (52) the threads of the textile with an impregnation material (13).

14. The method (50) according to Claim 13, wherein the impregnation (52) of the threads (11, 12) of the textile (10) with an impregnation material (13) is carried out by means of foularding.

15. The method (50) according to one of Claims 13 or 14, wherein the impregnation (52) of threads (11, 12) of the textile (10) with an impregnation material (13) and the application (53) of adhesive (14) to at least part of the threads (11, 12) includes the application of materials of the same family.
